(19) Europäisches Patentamt
European Patent Office
Office européen des brevets

(11) Veröffentlichungsnummer: **0 000 747**
**B1**

(12) **EUROPÄISCHE PATENTSCHRIFT**

(21) Anmeldenummer: **78100533.5**

(22) Anmeldetag: **28.07.78**

(51) Int. Cl³: **C 07 F 7/22**

(54) **Neue Organozinnhalogenide und Verfahren zu deren Herstellung**

(30) Priorität: **09.08.77 DE 2735757**

(43) Veröffentlichungstag der Anmeldung:
**21.02.79 Patentblatt 79/04**

(45) Bekanntmachung des Hinweises auf die Patenterteilung:
**25.06.80 Patentblatt 80/13**

(84) Benannte Vertragsstaaten: **BE CH DE FR GB NL**

(56) Entgegenhaltungen:
**FR - A - 2 306 208**
**US - A - 3 440 255**

(73) Patentinhaber: **Hoechst Aktiengesellschaft**
**Postfach 80 03 20**
**D - 6230 Frankfurt**
**Main 80 (DE)**

(72) Erfinder: **Korbanka, Helmut, Dr.**
**Birkenstrasse 24**
**D - 8901 Adelsried (DE)**
**Scheidl, Franz, Dr.**
**Hans-Fischer-Strasse 4**
**D - 8906 Gersthofen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 000 747 B1

# Neue Organozinnhalogenide und Verfahren zu deren Herstellung

Die Erfindung betrifft neue Organozinnhalogenide und ein Verfahren zu deren Herstellung.

Die bekannten technischen Verfahren zur Herstellung von Organozinnhalogeniden, wie Dibutylzinndichlorid, Monobutylzinntrichlorid oder Dioctylzinndichlorid sind sehr aufwendig sowie z. T. gefährlich und daher kostspielig, da sie auf der Grignard-, Aluminiumalkyl- oder Wurtz-Synthese basieren. Nach diesen Synthesen werden aus Alkyl- oder Arylchloriden und Zinntetrachlorid (Grignard, Wurtz) bzw. aus Aluminiumalkylen und Zinntetrachlorid Tetraalkyl- oder Tetraarylverbindungen hergestellt, die dann durch Komproportionierungsverfahren mit Zinntetrachlorid in die gewünschten Tri-, Di- und Monoorganozinnchloride überführt werden.

Weniger problematisch sind andere, auf metallischem Zinn basierende Verfahren. Nach dieser Direkt-Synthese setzt mann Zinn mit Alkylhalogeniden zu Alkylzinnhalogeniden um. Die Darstellungsmethode hat jedoch verschiedene Nacthteile, etwa die erforderlichen hohen Reaktionstemperaturen, insbesondere beim Einsatz von Alkylchloriden, und die Notwendigkeit der Verwendung von Katalysatoren wie N- und P-haltigen Verbindungen zusammen mit Jodverbindungen (DT—ASS 1 240 081 und 1 274 580), organischen Phosphiten (DT—OS 1 468 494), Ammonium- oder Phosphoniumverbindungen (DT—AS 1 277 255 und DT—OS 1 817 549), Gemischen aus metallischem Magnesium und Jod oder Alkyljodiden (US—PS 3 440 255) usf.

Eine weitere Möglichkeit zur Herstellung von Organozinnhalogeniden besteht darin, metallisches Zinn und Halogenwasserstoff mit aktivierten Olefinen umzusetzen. Es sind dies Olefine der allgemeinen Formel

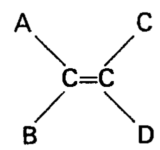

in der B, C und D für Wasserstoff oder einen Kohlenwasserstoffrest stehen und der Rest A, gegebenenfalls aber auch noch der Rest B eine der olefinischen Doppelbindung benachbarte Carbonylgruppe enthält (DT—OS 2 607 178). Die nach diesem Verfahren in hohen Ausbeuten herstellbaren Mischungen aus Organozinndi- und-trihalogeniden sind jedoch in manchen Fällen, insbesondere wenn bei höheren Temperaturen umgesetzt wird, durch in Nebenreaktionen gebildete Polymere der Ausgangsolefine verunreinigt, und diese Nebenprodukte lassen sich praktisch nicht abtrennen. Wenn sie im Verlauf der Weiterverarbeitung der Organozinnhalogenide auf Organozinnstabilisatoren mit diesen in Kunststoffmassen gelangen, führt dies zu im allgemeinen unerwünschten Trübungen der Massen.

Es wurde nun gefunden, daß bei Einsatz andersartiger Olefine, die zwar in Nachbarstellung zur olefinischen Doppelbindung ebenfalls eine Carbonylgruppe enthalten, jedoch zusätzlich durch mindestens eine, der Doppelbindung nicht benachbarte Carboxylatgruppe substituiert sind, überraschenderweise von Polymerisaten der betreffenden Olefine freie, bisher nicht beschriebene Organozinnhalogenide in Form von Mischungen aus Di- und Trihalogeniden herstellbar sind.

Die neuen Organozinnhalogenide besitzen die allgemeinen Formeln

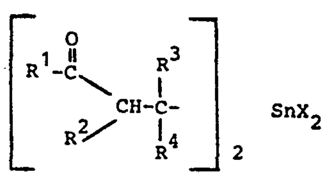 und 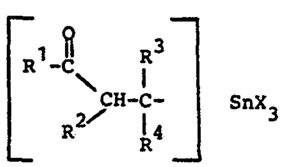

I II

in denen

$R^1$ OH, Halogen, $NH_2$, ein Alkyl- oder Arylaminorest, ein O-Alkylrest oder ein O-Arylrest ist, wobei die beiden letztgenannten Reste auch aryl- bzw. alkylsubstituiert sein können und sowohl als solche als auch in der aryl- bzw. alkylsubstituierten Form als zusätzliche Substituenten gegebenenfalls noch Halogen oder eine Hydroxyl-, Thioäther-, Äther- und/oder Carboxylgruppe tragen,

$R^2$ bis $R^4$ gleich oder verschieden sein können und die Bedeutung von 0 bis 2 Wasserstoffatomen sowie Alkylresten mit 1 bis 20 C-Atomen haben, wobei jedoch mindestens einer dieser Reste eine

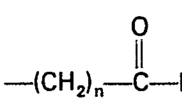-Gruppe,

in der n eine Zahl von 1 bis 15 ist, darstellt,
X für Chlor, Brom oder Jod steht

und die sich in den beiden Gemischkomponenten I und II entrsprechenden Reste $R^1$ bis $R^4$ und X stets gleich sind.

Beispiele für $R^1$ sind $—OH$, $—NH_2$, $—Cl$, $—Br$. $—J$, Alkyl- und

Arylaminoreste wie $—NH(CH_3)$, 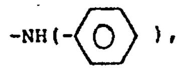 , $—N(C_2H_5)_2$, 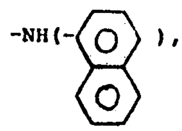 ,

O—Alkylreste wie $—OCH_3$, $—OC_2H_5$, $—OC_8H_{17}$, $—O—CH_2—CH(OH)—C_{10}H_{21}$,

$$—O—CH_2—CH_2—OH,\ —O—CH_2—CH(OH)—CH_2—O—C(=O)—C_{17}H_{35},$$

$$—O—CH_2—CH_2—Cl,\ —O—CH_2—CH_2—O—CH_3,$$

$$—O—CH_2—CH_2—S—CH_2—CH_2—OH,$$

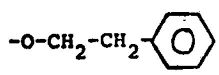 , 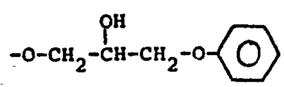 ,

und O-Arylreste wie 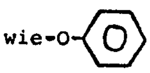 , 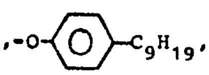 , 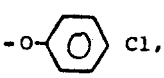 ,

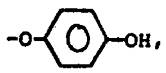 , 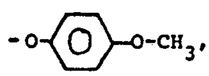 , 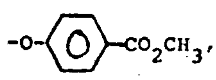 ,

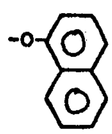

Beispiele für $R^2$ bis $R^4$ sind mindestens ein Rest der Struktur

$$—(CH_2)_nC(=O)—R^1 \text{ mit } n = 1 \text{ bis } 15, \text{ z.B. } —CH_2—CO_2H,$$

$$—CH_2—CO_2CH_3,\ —CH_2—CH_2—CO_2—C_8H_{17},$$

$$—(CH_2)_{11}—CO_2—CH_2—CH_2—O—C_4H_9,$$

$$—(CH_2)_4—CO_2—CH_2—CH_2—CH_2—CH(OH)—CH_2—S—C_{12}H_{25},$$

daneben Wasserstoff, Methyl, Äthyl, Propyl, Hexyl, Dodecyl, Octadecyl.

Bevorzugt sind Verbindungen, bei denen $R^1$ ein O—Alkylrest mit 1 bis 40, vorzugsweise 1 bis 30 und insbesondere 1 bis 20 Kohlenstoffatomen und $R^3$ und $R^4$ Wasserstoff ist, $R^2$ den Rest

$$—CH_2—C(=O)—R^1$$

mit dem für $R^1$ vorstehend angegebenen Vorzugsbereich darstellt und X Chlor bedeutet.

Zur Herstellung der neuen Organozinnhalogenide geht man in der Weise vor, daß man metallisches Zinn und Halogenwasserstoff mit einem Olefin der allgemeinen Formel

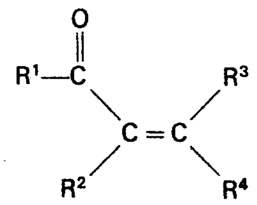

in der $R^1$ bis $R^4$ die oben angegebenen Bedeutungen haben, zur Reaktion bringt. Einige typische Vertreter geeigneter Olefine seien im folgenden aufgezählt:

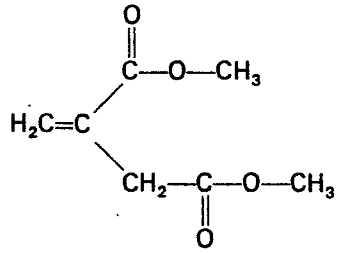

Itaconsäuredimethylester

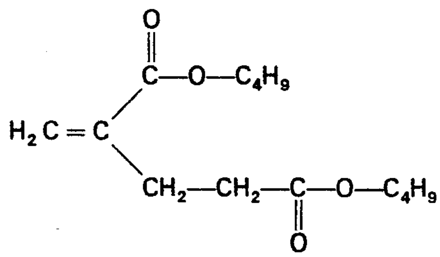

2-Methylenglutarsäuredibutylester

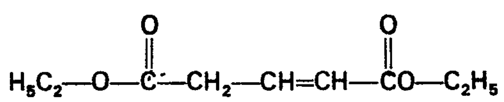

Glutaconsäure-di-äthylester

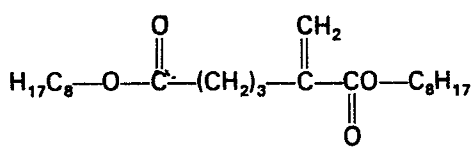

2-Methylenadipinsäure-di-n-octylester

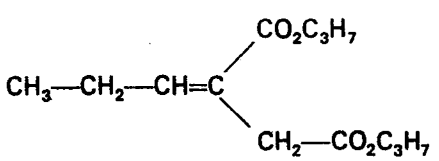

Propylidenbernsteinsäure-di-propylester

$HO_2C—(CH_2)_8—CH=CH—CO_2H$

Traumatinsäure

$HO_2C—(CH_2)_{12}—CH=CH—CO_2H$

Tetradecen-1-dicarbonsäure-(1,14)

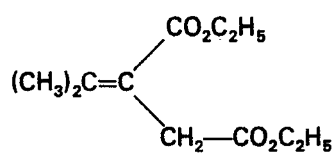

Teraconsäure-di-äthylester

Bevorzugte Olefine sind die Ester der Itaconsäure.

Die Reaktion kann ohne Lösungsmittel oder in z.B. Äthern, wie Diäthyläther, Tetrahydrofuran, Dioxan oder 1,2-Dimethoxy-äthan, in Estern wie Äthylacetat, in Ketonen wie Aceton oder Äthylmethylketon, in Alkoholen, wie Methanol, Äthanol und Butanol, in aromatischen Kohlenwasserstoffen, wie Toluol, Xylol, Chlorbenzol usf., in aliphatischen Kohlenwasserstoffen, wie Benzinen, chlorhaltigen Aliphaten wie Chloroform und Tetrachlorkohlenstoff, in Wasser (als konz. Salzsäure) oder auch in einem Olefin-Überschuß durchgeführt werden.

Der Halogenwasserstoff kann in Gasform oder als wäßrige Lösung, vor allem als konzentrierte wäßrige Lösung, in die Reaktion eingebracht werden. Bevorzugt ist Chlorwasserstoff.

Das metallische Zinn ist in jeglicher Form zur Umsetzung geeignet, bevorzugt ist jedoch aufgrund seiner großen, d.h. reaktiven Oberfläche das pulverförmige Zinn, jedoch ist auch granuliertes Zinn brauchbar.

Die Umsetzung kann entweder so gestaltet werden, daß man das Olefin, Lösungsmittel und Zinn vorlegt und Halogenwasserstoff einbringt oder das Olefin/Lösungsmittelgemisch mit Halogenwasserstoff sättigt und erst dann Zinn zugibt.

Die Reaktion läßt sich bei Temperaturen zwischen 0 und 150°C durchführen, zweckmäßigerweise arbeitet man zwischen etwa 0 und 100, vorzugsweise bei 20 bis 80°C.

Die bei der Umsetzung erhältlichen Oraganozinnhalogenide stellen Gemische aus Di- und Monoorganozinnhalogeniden der allgemeinen Formel $(R)_2SnHal_2$ und $(R)SnHal_3$ dar, wobei dem Rest R die allgemeine Struktur

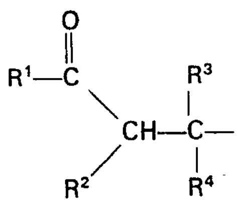

zuzuschreiben ist. Diese Struktur ist aufgrund der analytischen und spektroskopischen Daten, des Reaktionsverlaufs und der Chemie dieser Olefine als sehr wahrscheinlich anzusehen. Das ungefähre Verhältnis der Di- zur Monoverbindung kann aus den Chlorgehalten der Reaktionsprodukte rechnerisch ermittelt werden, es schwankt in weiten Bereichen und hängt von den Ausgangsprodukten und den Verfahrensbedingungen (z.B. vom verwendeten Lösungsmittel und der Einleitgeschwindigkeit des Halogenwasserstoffs) ab. Der Anteil an Monoorganozinntrichlorid $(R)SnCl_3$ im Reaktionsgemisch liegt im allgemeinen zwischen 0, 01 und 80 Gew.-%, d.h. das Verhältnis von Diorganozinnchlorid zu Monoorganozinnchlorid beträgt etwa 1:0 bis 1:4.

Eine Trennung der Di- und Trihalogenide ist nach bekannten Methoden, z.B. durch fraktionierte Kristallisation, möglich, jedoch insbesondere dann nicht erforderlich, wenn die Verfahrensprodukte auf Zinnstabilisatoren weiterverarbeitet werden.

Die neuen Organozinnhalogenide stellen wertvolle Zwischenprodukte dar, die sich z.B. zur Synthese von Pflanzenschutz- und Schädlingsbekämpfungsmitteln und als Ausgangsprodukte zur Herstellung von Wärmestabilisatoren für die Kunststoffverarbeitung eignen.

Beispiele

Beispiele 1

Ein mit Rühreinrichtung, Innenthermometer und einem Gaseinleitrohr ausgestatteter 500-ml-Dreihalskolben wurde mit 79 g (0,5 Mol) Itaconsäuredimethylester, 29,6 g (0,25 Mol) Zinnpulver und 150 ml Diäthyläther beschickt. Innerhalb von 2,5 Stunden wurden unter kräftigem Rühren und unter Kühlung bei einer Temperatur von 20 bis 25°C gleichmäßig insgesamt 36,5 g (1 Mol) trochener, gasförmiger Chlorwasserstoff eingeleitet. Man rührte bei 20 bis 25°C noch 10 Stunden weiter. Danach war kein Zinn mehr vorhanden. Anschließend zog man unter Wasserstrahlvakuum den Äther und den überschüssigen Chlorwasserstoff ab. Zurück blieb eine helle, hochviskose Flüssigkeit, die kein Zinn-II-chlorid enthielt.

| | | |
|---|---|---|
| Ausbeute: | 135,5 g | Organozinnchlorid-Gemisch |
| Analysen: | 19,7 % | Gesamtchlor |
| | 19,5 % | verseifbares Chlor |
| | 21,8 % | Zinn |
| Jod zahl: | 1 g/100 g | Substanz |

Berechnung des Anteiles an $(R)_2SnCl_2$ und $(R)SnCl_3$ aus dem gefundenen Chlorgehalt.

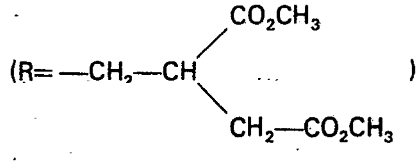

ca. 59 % $(R_2)SnCl_2$ und ca. 41 % $(R)SnCl_3$.

Aus den Chloranalysen ergibt sich weiterhin, daß praktisch kein Chlorwasserstoff an die Doppelbindung des Itaconsäuredimethylesters angelagert worden ist. Die gefundene Jodzahl beweist, daß praktisch kein Itaconsäureester mehr vorhanden ist.

Erhitzt man das Reaktionsprodukt in genügend Toluol, so entsteht eine klare Lösung, aus der beim Abkühlen die Verbindung der Struktur in Form von weißen Kristallen vom Smp. 144 bis 146°C ausfällt.

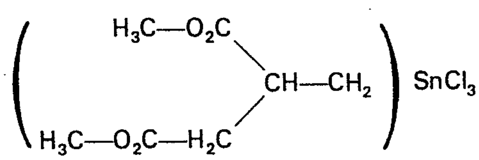

Beispiel 2

In der in Beispiel 1 beschriebenen Apparatur wurden 197,5 g (1,25 Mol) Itaconsäuredimethylester und 29,6 g (0,25 Mol) Zinnpulver vorgelegt und auf 45°C erwärmt. Innerhalb von 4 Stunden wurden bei dieser Temperatur 36,5 (1 Mol) Chlorwasserstoffgas gleichmäßig eingeleitet. Nach weiterem 4-stündigem Rühren bei 45°C war kein Zinn mehr vorhanden. Anschließend zog man den überschüssigen Chlorwasserstoff ab und destillierte bei einer Bad-temperatur von 120°C und 10 Torr den Itaconsäuredimethylester-Überschuß ab. Es blieb ein helles, viskoses, Zinn-II-chlorid-freies Produkt zurück, das auch keinerlei Polymere enthielt.

| | | | |
|---|---|---|---|
| Ausbeute: | 127,4 g | Organozinnchlorid-Gemisch | |
| Analysen: | 17,8 % | Gesamtchlor | |
| | 17,7 % | verseifbares Chlor | |
| | 23,0 % | Zinn | |
| Jodzahl: | 1 g | Jod/100 g | Substanz |

aus dem Chlorwert berechnet: ca. 72 % $(R)_2SnCl_2$
ca. 28 % $(R)SnCl_3$

Beispiel 3

Es wurde wie in Beispiel 2 gearbeitet; jedoch bei einer Temperatur von 120 bis 125°C.

Das Verfahrensprodukt entsprach in allen Analysenwerten dem des nach Beispiel 2 erhaltenen. Es enthielt ebenfalls keine Spur von Polymethylitaconat.

Beispiel 4

In der in Beispiel 1 beschriebenen Apparatur wurden 60,5 g (0,25 Mol) Itaconsäure-di-n-butylester, 14,8 g (0,125 Mol) Zinnpulver und 300 ml Toluol vorgelegt und auf 80°C erwärmt.

Bei dieser Temperatur wurden im Verlauf von sechs Stunden 24 1 Chlorwasserstoffgas eingeleitet. Anschließend wurde 20 Stunden bei 80°C weitergerührt. Danach enthielt die Lösung nur mehr Spuren an Zinn. Nach der Aufarbeitung fiel eine helle, viskose Flüssigkeit als Reaktionsprodukt an.

| | | | |
|---|---|---|---|
| Ausbeute: | 87,4 g | Organozinnchlorid-Gemisch | |
| Analysen: | 13,7 % | Gesamtchlor | |
| | 13,7 % | verseifbares Chlor | |
| | 16,8 % | Zinn | |
| Jodzahl: | 1,2 g | Jod/100 g | Substanz |

aus dem Chlorwert berechnet: ca. 87 % $(R)_2SnCl_2$
ca. 13 % $(R)SnCl_3$

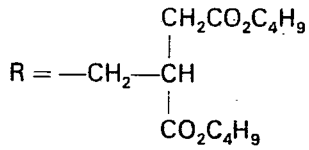

Beispiel 5

In der in Beispiel 1 beschriebenen Apparatur wurden 121 g (0,5 Mol) Itaconsäure-di-n-butylester, 29,6 g (0,25 Mol) Zinnpulver und 150 ml 1,4-Dioxan vorgelegt und auf 80°C erwärmt. Bei dieser Temperatur wurde 5 Stunden lang gasförmiger Chlorwasserstoff (5 1/Std.) eingeleitet. Nach dieser Zeit war kein Zinn mehr vorhanden. Nach der Aufarbeitung blieb eine eine helle, viskose Flüssigkeit als Reaktionsprodukt zurück.

| | | | |
|---|---|---|---|
| Ausbeute: | 179,6 g | Organozinnchlorid-Gemisch | |
| Analyse: | 15,4% | Gesamtchlor | |
| | 15,2 % | verseifbares Chlor | |
| | 16,4 % | Zinn | |
| Jodzahl: | 1,3 g | Jod/100 g | Substanz |

aus dem Chlorwert berechnet: ca. 70 % $(R)_2SnCl_2$
ca. 30 % $(R)SnCl_3$

Beispiel 6

Nach der in Beispiel 1 beschriebenen Verfahrensweise wurden 128,0 g (0,5 Mol) 2-Methylenglutarsäure-di-n-butylester mit 29,6 g (0,25 Mol) Zinn und 36,5 g (1 Mol) Chlorwasserstoff umgesetzt.

| | | | |
|---|---|---|---|
| Ausbeute: | 179,6 g | Organozinnchlorid-Gemisch als gelbliche Flüssigkeit | |
| Analysen: | 12,5 % | Gesamtchlor | |
| | 12,4 % | verseifbares Chlor | |
| | 16,3 % | Zinn | |
| Jodzahl: | 1 g | Jod/100 g | Substanz |

aus dem Chlorwert berechnet: ca. 93 % $(R)_2SnCl_2$
ca. 7 % $(R)SnCl_3$

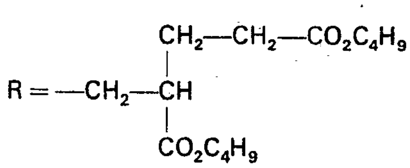

Beispiel 7

In einem mit Rühreinrichtung, Innenthermometer und Tropftrichter ausgestatteten 250-ml-Dreihalskolben wurden 60,5 g (0,25 Mol) Itaconsäure-di-n-butylester und 14,8 g (0,125 Mol) Zinnpulver vorgelegt. Bei einer Temperatur von etwa 20°C wurden innerhalb von 1 Stunde 29,6 g 37 %ige, wäßrige Salzsäure, entsprechend 10,95 g (0,3 Mol Chlorwasserstoff, zugetropft. Man rührte noch 10 Stunden bei Raumtemperatur weiter, extrahierte das von Zinnpulver-Resten nahezu freie Reaktionsgemisch mit 150 ml Toluol und trennte die Toluolphase ab. Bei 100°C/10 Torr wurde das Toluol abgezogen. Es blieb eine bräunliche Flüssigkeit als Rückstand zurück.

| | | | |
|---|---|---|---|
| Ausbeute: | 80,0 g | Organozinnchlorid-Gemisch | |
| Analysen: | 12,4 % | Gesamtchlor = verseifbares Chlor | |
| | 19,3 % | Zinn | |
| Jodzahl: | 1,2 g | Jod/100 g | Substanz |

aus dem Chlorwert berechnet: ca. 100 % $(R)_2SnCl_2$

$$R = -CH_2-\underset{\displaystyle CO_2C_4H_9}{\underset{|}{CH}}-CH_2-CO_2C_4H_9$$

Beispiele 8 bis 14

Bei den in der folgenden Tabelle verzeichneten Beispielen wurde nach der in Beispiel 1 beschriebenen Methode gearbeitet. Es kamen stets 29,6 g (0,25 Mol) Zinn und 36,5 g (1 Mol) Chlorwasserstoffgas zum Einsatz.

| Bsp. Nr. | Verfahrensbedingungen | | | | | Reaktionsprodukte | | | | | |
|---|---|---|---|---|---|---|---|---|---|---|---|
| | Olefin | g | Mol | Lös. mit- tel | Reakt. temp. °C | g | % Cl | % Sn | JZ | Form | aus Chlorwert ber. % $(R)_2SnCl_2$/ % $(R)SnCl_3$ |
| 8 | Itaconsäure | 65,0 | 0,5 | 1) | 20 | 111,6 | 24,2 | 26,2 | < 1 | fest | 50/50 |
| 9 | Itaconsäuredi- chlorid | 83,5 | 0,5 | 2) | 10 | 131,0 | 41,0 | 22,6 | < 1 | flüss. | 100/0 |
| 10 | Itaconsäure-di-n- octylester | 177,0 | 0,5 | 3) | 80 | 230,6 | 10,4 | 12,7 | 0 | flüss. | 75/25 |
| 11 | Itaconsäure-di- anilid | 152,0 | 0,5 | 4) | 40 | 208,0 | 12,5 | 14,1 | — | fest | 68/32 |
| 12 | Glutaconsäure-di- n-octylester | 177,0 | 0,5 | 5) | 60 | 229,8 | 10,1 | 12,7 | 0 | flüss. | 79/21 |
| 13 | Dimethyl-itacon- säure-di-n-butyl-ester | 135,0 | 0,5 | 2) | 20 | 185,6 | 11,2 | 15,7 | < 1 | flüss. | 87/13 |
| 14 | n-Hexyl-itacon- säure-di-äthyl-ester | 135,0 | 0,5 | 2) | 40 | 188,8 | 12,7 | 15,6 | < 1 | flüss. | 75/25 |

Lösungsmittel 1) Aceton 2) Diäthyläther 3) Toluol 4) 1,2-Dimethoxyäthan 5) 1,4-Dioxan

**Patentansprüche**

1. Gemisch von Organozinnhalogeniden, die durch die allgemeinen Formeln

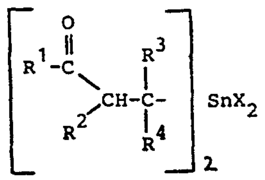

und

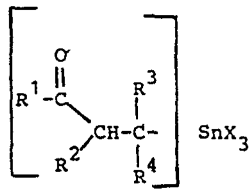

charakterisiert werden, in denen

$R^1$ OH, Halogen, Amino, ein Alkyl- oder Arylaminorest, ein O-Alkylrest oder ein O-Arylrest ist, wobei die beiden letztgenannten Reste auch aryl- bzw. alkylsubstituiert sein können und sowohl als solche als auch in der aryl- bzw. alkylsubstituierten Form als zusätzliche Substituenten ggf. noch Halogen oder eine Hydroxyl-, Thioäther-, Äther- und/oder Carboxyl-Gruppe tragen,

$R^2$ bis $R^4$ gleich oder verschieden sein können und die Bedeutung von 0 bis 2 Wasserstoffatomen sowie Alkylresten mit 1 bis 20 C-Atomen haben, wobei jedoch mindestens einer dieser Reste eine

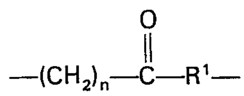

Gruppe, in der n eine Zahl von 1 bis 15 ist, darstellt,

X für Chlor, Brom oder Jod steht

und die sich in den beiden Gemischkomponenten I und II entsprechenden Reste $R^1$ bis $R^4$ und X stets gleich sind.

2. Gemisch von Organozinnhalogeniden nach Anspruch 1, dadurch gekennzeichnet, daß in den beiden Komponenten der Rest $R^1$ eine O-Alkylgruppe mit 1 bis 40 C-Atomen, der Rest $R^2$ das Radikal

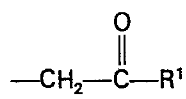

mit $R^1$ wie vorstehend angegeben und X ein Chloratom ist, und die Reste $R^3$ und $R^4$ Wasserstoff bedeuten.

3. Gemisch von Organozinnhalogeniden nach den Ansprüchen 1 und 2, dadurch gekennzeichnet, daß das Gewichtsverhältnis der Komponente I zu Komponente II 1: 0,01 bis 1 :4 beträgt.

4. Verfahren zur Herstellung der in den Ansprüchen 1 und 2 charakterisierten Gemische von Organozinnhalogeniden, dadurch gekennzeichnet, daß man ein Olefin der allgemeinen Formel

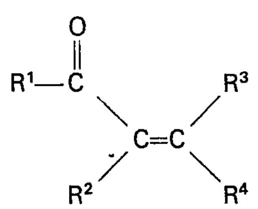

in der die Reste $R^1$ bis $R^4$ die in Anspruch 1 und 2 angegebene Bedeutung haben, mit metallischem Zinn und wäßrigem oder gasförmigem Halogenwasserstoff, gegebenenfalls in Gegenwart eines inerten Lösungsmittels, bei Temperaturen zwischen etwa 0 und 150°C miteinander umsetzt.

**Revendications**

1. Mélange d'halogénures organo-stanniques caractérisés par les formules générales

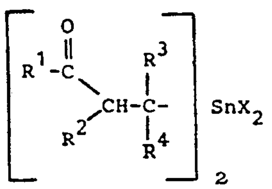
et
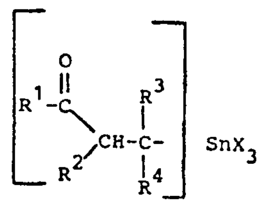

dans lesquelles

$R^1$ désigne un groupe OH, un atome d'halogène, un groupe amino, un radical alkylamino ou arylamino, un radical O-alkyle ou un radical O-aryle, les deux derniers radicaux pouvant également être substitués par un groupe aryle ou alkyle et pouvant porter, tels quels ou substitués par un groupe aryle ou alkyle, le cas échéant comme substituants additionnels, un atome d'halogène ou un groupe hydroxyle, un groupe thio-éther, un groupe d'éther et/ou un groupe carboxyle,

$R^2$ à $R^4$ peuvent être identiques ou différents et désignent de 0 à 2 atomes d'hydrogène ainsi que des radicaux alkyles ayant de 1 à 20 atomes de carbone, cependant, d'au moins un de ces radicaux représentant un groupe

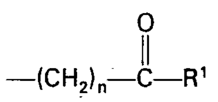

dans lequel n est un nombre de 1 à 15,

X désigne un atome de chlore, de brome ou d'iode,

et les radicaux $R^1$ à $R^4$ et X correspondant l'un à l'autre dans les deux composantes I et II du mélange sont toujours identiques.

2. Mélange d'halogénures organo-stanniques selon la revendication 1, caractérisé en ce que dans les deux composants le radical $R^1$ est un groupe O-alkyle ayant de 1 à 40 atomes de carbone, le radical $R^2$ désigne le radical

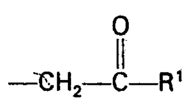

avec $R^1$ ayant la signification indiquée ci-dessus, X est un atome de chlore, et les radicaux $R^3$ et $R^4$ désignent chacun un atome d'hydrogène.

3. Mélange d'halogénures organo-stanniques selon l'une des revendications 1 et 2, caractérisé en ce que le rapport en poids de la composante I à la composante II est de 1 : 0,01 à 1 : 4.

4. Procédé de préparation des mélanges d'halogénures organo-stanniques spécifiés dans les revendications 1 et 2, caractérisé en ce qu'on fait réagir une oléfine répondant à la formule générale

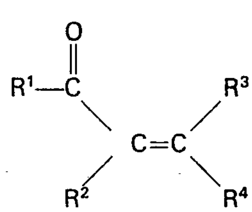

dans laquelle les radicaux $R^1$ à $R^4$ ont les significations données aux revendications 1 et 2, avec de l'étain métallique et un halogénure d'hydrogène aqueux ou gazeux, le cas échéant en présence d'un solvant inerte à des températures comprises entre environ 0 et 150°C.

**Claims**

1. Mixture of organotin halides of the formulae

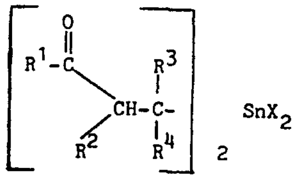 and 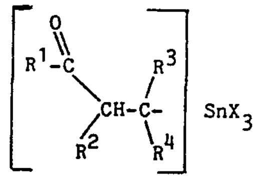

I II

in which

$R^1$ is OH, halogen, $NH_2$, an alkyl- or arylamino radical, an O-alkyl or O-aryl radical, both the latter radicals being unsubstituted or substituted by aryl or alkyl and optionally carrying as additional substituents halogen or a hydroxy, thioether, ether and/or carboxyl group;

$R^2$ to $R^4$, being identical or different, each represent 0 to 2 hydrogen atoms, or alkyl radicals having from 1 to 20 carbon atoms; at least one of these radicals, however, being a

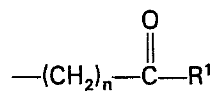

group where *n* is an integer of from 1 to 15;

X is chlorine, bromine or iodine,

and the radicals $R^1$ to $R^4$ and X corresponding to one another in the components I and II of the mixture are always identical.

2. Mixture of organotin halides as claimed in claim 1, wherein in both components $R^1$ is an O-alkyl group having from 1 to 40 carbon atoms, $R^2$ is

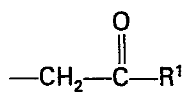

($R^1$ being as defined in this claim), X is chlorine, and $R^3$ and $R^4$ each are hydrogen.

3. Mixture of organotin halides as claimed in claims 1 and 2, wherein the weight ratio of component I to component II is from 1:0.01 to 1:4.

4. A process for the manufacture of the mixture of organotin halides as claimed in claims 1 and 2, which comprises reacting an olefin of the formula

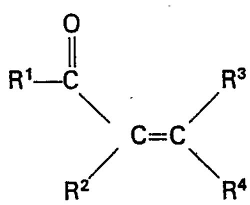

in which the radicals $R^1$ to $R^4$ are as defined in claims 1 and 2, with metallic tin and aqueous or gaseous hydrogen halide, optionally in the presence of an inert solvent, at temperatures of from about 0 to 150°C.